# EUROPEAN PATENT APPLICATION

(11) **EP 4 618 683 A1**
(43) Date of publication of application: **17.09.2025**
(21) Application number: 23888281.5
(22) Date of filing: 10.07.2023
(51) Int. Cl.: H04W 74/08, H04W 4/70, H04W 72/0446

(54) **TERMINAL, BASE STATION, AND COMMUNICATION METHOD**

(30) Priority: 07.11.2022 JP 2022178216
(71) Applicant: Panasonic Intellectual Property Corporation of America, Torrance, CA 90504 (US)
(72) Inventor: MAKI, Shotaro, Kadoma-shi, Osaka 571-0057 (JP); SUZUKI, Hidetoshi, Kadoma-shi, Osaka 571-0057 (JP)
(74) Representative: Grünecker Patent- und Rechtsanwälte PartG mbB
(86) International application number: PCT/JP2023/025372
(87) International publication number: WO 2024/100924

(57) **Abstract**

This terminal comprises: a reception circuit that receives a first signal; and a transmission circuit that transmits a second signal after the first signal has been received, wherein the transmission timing of the second signal differs according to a parameter related to the resource size of the first signal.

## Description

### Technical Field

The present disclosure relates to a terminal, a base station, and a communication method.

### Background Art

A communication system called the 5th generation mobile communication system (5G) has been studied. The 3rd Generation Partnership Project (3GPP), which is an international standards-developing organization, has been studying development of the 5G communication system in terms of both the development of LTE/LTE-Advanced systems and a New Radio Access Technology (also referred to as New RAT or NR), which is a new method not necessarily backward compatible with the LTE/LTE-Advanced systems (see, e.g., Non Patent Literature (hereinafter referred to as "NPL") 1).

### Citation List

### Non-Patent Literature

NPL 1
   RP-181726, "Revised WID on New Radio Access Technology", NTT DOCOMO, September 2018
NPL 2
   RP-213661, "New SID on Study on further NR RedCap UE complexity reduction", Ericsson, December 2021

### Summary of Invention

There is room for consideration regarding a configuration method of an uplink transmission timing for a terminal.

One non-limiting exemplary embodiment of the present disclosure contributes to providing a terminal, a base station, and a communication method that can appropriately configure an uplink transmission timing for a terminal.

A terminal according to one exemplary embodiment of the present disclosure includes: reception circuitry, which, in operation, receives a first signal; and transmission circuitry, which, in operation, transmits a second signal after the first signal is received, in which a transmission timing of the second signal is different depending on a parameter related to a resource size of the first signal.

It should be noted that general or specific embodiments may be implemented as a system, an apparatus, a method, an integrated circuit, a computer program, a storage medium, or any selective combination thereof.

According to one exemplary embodiment of the present disclosure, it is possible to appropriately configure the uplink transmission timing for a terminal.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 is a block diagram illustrating an exemplary configuration of a part of a base station;
FIG. 2 is a block diagram illustrating an exemplary configuration of a part of a terminal;
FIG. 3 is a block diagram illustrating an exemplary configuration of the base station;
FIG. 4 is a block diagram illustrating an exemplary configuration of the terminal;
FIG. 5 is a diagram illustrating an exemplary operation of the base station and the terminal;
FIG. 6 illustrates an exemplary architecture for a 3GPP NR system;
FIG. 7 illustrates functional split between NG-RAN and 5GC;
FIG. 8 is a sequence diagram of a Radio Resource Control (RRC) connection setup/reconfiguration procedure;
FIG. 9 is a schematic diagram illustrating usage scenarios of enhanced Mobile BroadBand (eMBB), massive Machine Type Communications (mMTC), and Ultra Reliable and Low Latency Communications (URLLC); and
FIG. 10 is a block diagram illustrating an exemplary 5G system architecture for a non-roaming scenario.

### Description of Embodiments

Hereinafter, embodiments of the present disclosure will be described in detail with reference to the accompanying drawings.

Note that, in the following description, a radio frame, a slot, and a symbol are, for example, each a physical resource unit in a time domain, for example. For example, the length of one frame may be 10 milliseconds. For example, one frame may be configured by a plurality (e.g., 10, 20, or another value) of slots. Further, for example, the number of slots configuring one frame may be variable depending on the slot length. Furthermore, for example, one slot may be configured by a plurality (e.g., 14 or 12) of symbols. For example, one symbol is the smallest physical resource unit in the time domain, and the symbol length may vary depending on the subcarrier spacing (SCS).

Further, a subcarrier and a resource block (RB) are each a physical resource unit in a frequency domain. For example, one resource block may be configured by 12 subcarriers. For example, one subcarrier may be the smallest physical resource unit in the frequency domain. The subcarrier spacing is variable, and may be 15 kHz, 30 kHz, 60 kHz, 120 kHz, 240 kHz, 480 kHz, and 960 kHz or another value, for example.

### [Regarding evolved Reduced Capability NR Devices]

In Release 18 NR (hereinafter also referred to as Rel-18), terminals called evolved Reduced Capability NR Devices (eRedCap) (for example, a mobile station or user equipment (UE)) (for example, referred to as eRedCap terminals) are expected to be supported. The eRedCap terminals aim to reduce manufacturing costs, for example, by limiting supported characteristics (e.g., capabilities). The characteristics that the eRedCap terminals may support include, for example, the following:
The maximum number (for example, the total sum of the frequency bandwidths occupied by each PRB) of physical resource blocks (PRBs) on which reception processing can be performed per certain time is approximately 5 MHz. For example,
- the maximum number of PRBs is approximately 25 when the subcarrier spacing (SCS) is 15 kHz, or
- the maximum number of PRBs is approximately 11, when SCS is 30 kHz.

Hereinafter, the number of PRBs corresponding to the characteristics that the above eRedCap terminal can support will be referred to as the "number of PRBs equivalent to 5 MHz" for convenience.

Here, a terminal corresponding to Release 15/16/17 (for example, also referred to as Rel-15/16/17) and a terminal corresponding to Rel-18 which has a capability larger than that of an eRedCap terminal (or a terminal whose capability is not limited) are referred to as a "non-eRedCap terminal" with respect to the eRedCap terminal. For example, a Rel-17 RedCap terminal is also included in the non-eRedCap terminal.

In a cell that supports Rel-18, both eRedCap terminals and non-eRedCap terminals may coexist.

The eRedCap has been described, thus far.

A base station (for example, also referred to as gNB) may be in a situation where the base station does not identify whether a terminal to which a resource is allocated is an eRedCap terminal. In this case, the number of PRBs in the allocation resource may be larger than the "number of PRBs equivalent to 5 MHz". That is, the base station may allocate resources that exceed the characteristics that the eRedCap terminal can support.

For example, this situation may occur in the allocation of resources for each of a data channel (for example, Physical Downlink Shared Channel (PDSCH)) used by the terminal for receiving Message 2 (also referred to as Random Access Response (RAR) or Msg 2) and a data channel (for example, Physical Uplink Shared Channel (PUSCH)) for transmitting Message 3 (also referred to as Msg 3) in the initial access (random access procedure).

For example, in a case where the number of allocation PRBs for a PDSCH for RAR is larger than the "number of PRBs equivalent to 5 MHz", the timing at which the reception processing on RAR is completed in the eRedCap terminal may be later than the timing assumed by the base station, and the reception processing on RAR may not be completed at the time resource (transmission timing) of the PUSCH to which Msg 3 is allocated. For this reason, the eRedCap terminal may not be able to transmit Msg 3 in the time resource (transmission timing) scheduled for the RAR before the reception processing of the RAR is completed.

In contrast, for example, there may be a method of configuring (or limiting) the number of PRBs allocated for PDSCH for RAR to be equal to or less than the "number of PRBs equivalent to 5 MHz". In this method, the base station does not allocate a resource larger than the "number of PRBs equivalent to 5 MHz" as a PDSCH resource for RAR. Thus, it is possible to prevent the timing of the completion of the RAR reception processing in the eRedCap terminal from being later than the timing assumed by the base station, and the eRedCap terminal can appropriately transmit Msg 3 in the time resource (transmission timing) of the PUSCH to be allocated.

Meanwhile, in this method, the number of PRBs allocated for PDSCH for RAR to a non-eRedCap terminal is also configured (or limited) to be equal to or less than the "number of PRBs equivalent to 5 MHz", and thus, the reception performance may be degraded in the non-eRedCap terminal to which a resource allocation larger than the "number of PRBs equivalent to 5 MHz" is possible.

Accordingly, in a non-limiting exemplary embodiment of the present disclosure, a method for appropriately configuring the uplink transmission timing for a terminal in a cell where, for example, an eRedCap terminal and a non-eRedCap terminal coexist will be described.

### [Overview of Communication System]

A communication system according to the present embodiment includes base station 100 and terminal 200. Terminal 200 may be, for example, an eRedCap terminal or a non-eRedCap terminal.

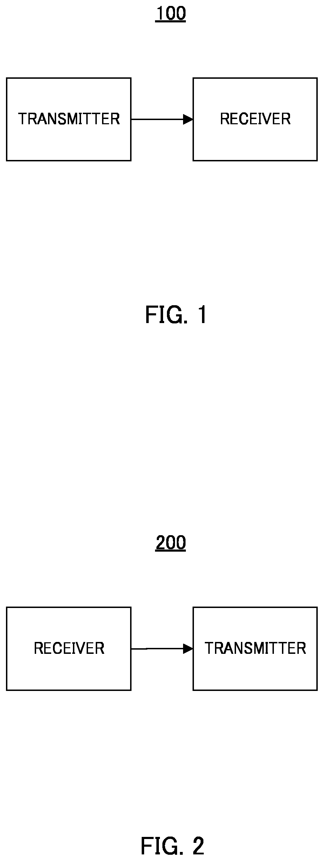

FIG. 1 is a block diagram illustrating an exemplary configuration of a part of base station 100 according to the present embodiment. In base station 100 illustrated in FIG. 1, a transmitter (corresponding to, for example, transmission circuitry) transmits a first signal (for example, PDSCH for RAR), and a receiver (corresponding to, for example, reception circuitry) receives a second signal (for example, PUSCH for Msg 3) after the first signal is transmitted.

FIG. 2 is a block diagram illustrating an exemplary configuration of a part of terminal 200 according to the present embodiment. In terminal 200 illustrated in FIG. 2, a receiver (corresponding to, for example, reception circuitry) receives a first signal (for example, PDSCH for RAR), and a transmitter (corresponding to, for example, transmission circuitry) transmits a second signal (for example, PUSCH for Msg 3) after the first signal is received.

Here, the transmission timing of the second signal (for example, PUSCH for Msg 3) is different depending on a parameter related to the resource size of the first signal (for example, PDSCH for RAR) (for example, the number of PRBs, the TB size, or the TB scaling factor).

### (Embodiment 1)

### [Configuration of Base Station]

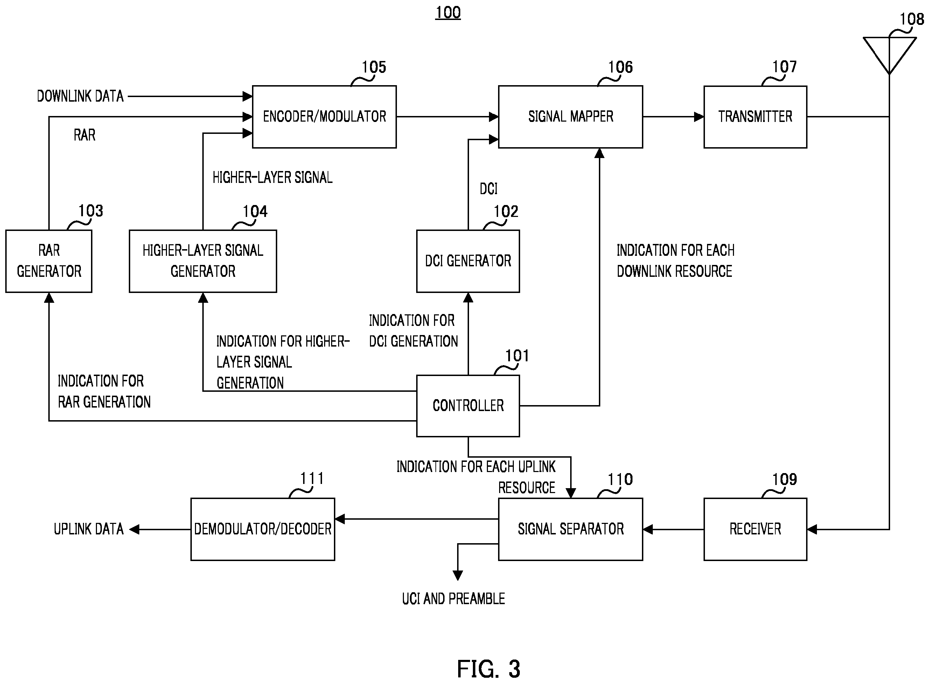

FIG. 3 is a block diagram illustrating an exemplary configuration of base station 100 according to the present embodiment. In FIG. 3, base station 100 includes controller 101, Downlink Control Information (DCI) generator 102, RAR generator 103, higher-layer signal generator 104, encoder/modulator 105, signal mapper 106, transmitter 107, antenna 108, receiver 109, signal separator 110, and demodulator/decoder 111.

For example, at least one of transmitter 107 and antenna 108 illustrated in FIG. 3 may be included in the transmitter illustrated in FIG. 1. Further, for example, at least one of antenna 108 and receiver 109 illustrated in FIG. 3 may be included in the receiver illustrated in FIG. 1.

Controller 101 may determine, for example, the resource (for example, including a downlink resource and an uplink resource) to be allocated to terminal 200.

For example, controller 101 may indicate, to higher-layer signal generator 104, generation of a higher layer signal (e.g., also referred to as higher layer parameter or higher layer signaling), based on information on the determined resource. Controller 101 may also indicate, to DCI generator 102, generation of control information (e.g., DCI) to be included in a downlink control channel (e.g., PDCCH), based on the information on the determined resource, for example. Further, controller 101 may, for example, indicate the generation of an RAR in the random access procedure to RAR generator 103 based on information on the determined resource.

Further, controller 101 outputs (or indicates) information on the downlink resource to signal mapper 106 and outputs (or indicates) information on the uplink resource to signal separator 110.

For example, DCI generator 102 may generate DCI based on the indication from controller 101 and output the generated DCI to signal mapper 106.

RAR generator 103 may generate an RAR based on the indication from, for example, controller 101, and may output the generated RAR to encoder/modulator 105.

Higher-layer signal generator 104 may generate a higher layer signal such as system information based on the indication from controller 101, for example, and may output the generated higher layer signal to encoder/modulator 105.

Encoder/modulator 105 may, for example, perform error correction encoding and modulation on downlink data, the RAR inputted from RAR generator 103, and the higher layer signal inputted from higher-layer signal generator 104, and may output the modulated signal to signal mapper 106.

Signal mapper 106 may, for example, map at least one of the DCI inputted from DCI generator 102 and the signal inputted from encoder/modulator 105 to a resource based on the information on the downlink resource inputted from controller 101. For example, signal mapper 106 may map the signal input from encoder/modulator 105 to a PDSCH resource and map the DCI to a downlink control channel (e.g., Physical Downlink Control Channel (PDCCH)) resource. Signal mapper 106 outputs the signal mapped to each resource to transmitter 107.

For example, transmitter 107 performs radio transmission processing including frequency conversion (e.g., up-conversion) using a carrier wave on the signal input from signal mapper 106, and outputs the signal after the radio transmission processing to antenna 108.

Antenna 108 radiates the signal (e.g., downlink signal) input from transmitter 107 toward terminal 200, for example. Further, antenna 108 receives an uplink signal transmitted from terminal 200, and outputs the uplink signal to receiver 109, for example.

The uplink signal may be, for example, a signal of a channel such as an uplink data channel (e.g., PUSCH), uplink control channel (e.g., Physical Uplink Control Channel (PUCCH)), or random access channel (e.g., Physical Random Access Channel (PRACH)).

Receiver 109 performs radio reception processing, including frequency conversion (for example, down-conversion), on the signal inputted from antenna 108, and outputs the signal after the radio reception processing to signal separator 110.

Signal separator 110 extracts (or separates), for example, a signal (for example, UCI) on a PUCCH resource and a signal (for example, preamble) on a PRACH from the signals inputted from receiver 109 based on the information on the uplink resource inputted from controller 101. Further, signal separator 110 outputs, for example, the signal on a PUSCH resource among the signals inputted from receiver 109 to demodulator/decoder 111.

For example, demodulator/decoder 111 demodulates and decodes the signal input from signal separator 110, and outputs uplink data.

### [Configuration of Terminal]

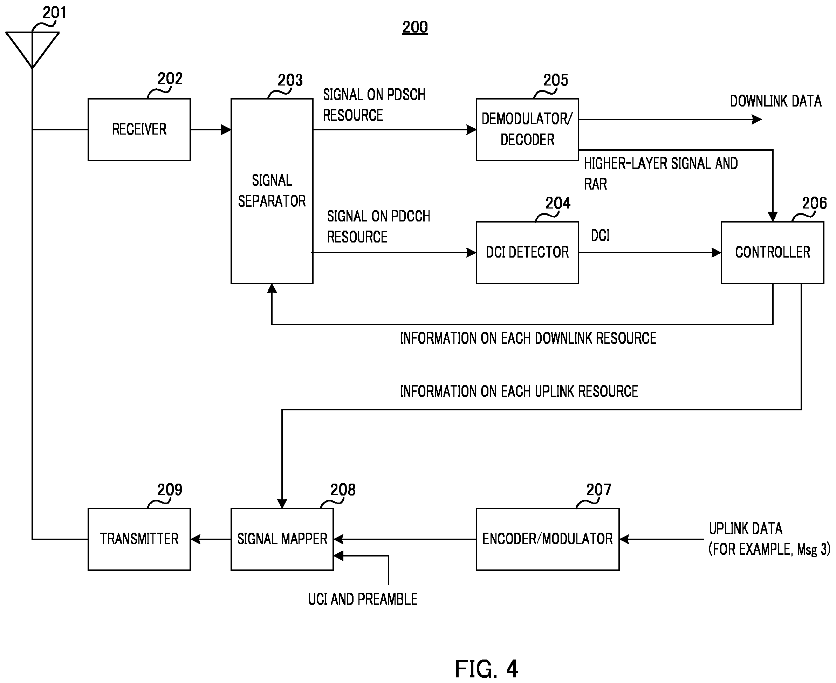

FIG. 4 is a block diagram illustrating an exemplary configuration of terminal 200 according to the present embodiment.

In FIG. 4, terminal 200 includes antenna 201, receiver 202, signal separator 203, DCI detector 204, demodulator/decoder 205, controller 206, encoder/modulator 207, signal mapper 208, and transmitter 209.

For example, at least one of antenna 201 and receiver 202 illustrated in FIG. 4 may be included in the receiver illustrated in FIG. 2. Further, for example, at least one of antenna 201 and transmitter 209 illustrated in FIG. 4 may be included in the transmitter illustrated in FIG. 2.

Antenna 201 receives a downlink signal (downlink channel) transmitted by base station 100, and outputs the downlink signal to receiver 202. In addition, antenna 201 radiates an uplink signal (uplink channel) input from transmitter 209 to base station 100.

For example, receiver 202 performs radio reception processing including frequency conversion (e.g., down-conversion) on the signal input from antenna 201, and outputs the signal after the radio reception processing to signal separator 203.

Signal separator 203 extracts (for example, separates) a signal on a PDCCH resource from the signals inputted from receiver 202 based on the information on the downlink resource inputted from controller 206, for example, and outputs the signal to DCI detector 204. Further, signal separator 203 outputs, from signals input from receiver 202, a signal on a PDSCH resource to demodulator/decoder 205, based on the indication from controller 206.

For example, DCI detector 204 may detect DCI from the signal (e.g., signal on PDCCH resource) input from signal separator 203. DCI detector 204 may output the detected DCI to controller 206, for example.

For example, demodulator/decoder 205 performs demodulation and error correction decoding on the signal (e.g., signal on the PDSCH resource) input from signal separator 203, and obtain at least one of the downlink data, the higher layer signal such as system information, and RAR. For example, demodulator/decoder 205 may output the higher layer signal and RAR obtained by decoding to controller 206. Further, demodulator/decoder 205 may output the downlink data obtained by decoding, for example.

Controller 206 may determine (or identify) the downlink resource and the uplink resource based on, for example, at least one of the DCI inputted from DCI detector 204, and the higher layer signal (for example, system information) and the RAR inputted from demodulator/decoder 205. For example, controller 206 may output (for example, indicate) information on the identified downlink resource to signal separator 203, and may output (for example, indicate) information on the identified uplink resource to signal mapper 208.

Encoder/modulator 207 may, for example, encode and modulate uplink data (e.g., Msg 3) and output the modulated signal to signal mapper 208.

Signal mapper 208 may, for example, based on information on the uplink resource inputted from controller 206, map the signal inputted from encoder/modulator 207 to a PUSCH resource, map UCI to a PUCCH resource, and map a preamble to a PRACH resource. Signal mapper 208 outputs the signal mapped to each resource to transmitter 209.

Transmitter 209 performs radio transmission processing including frequency conversion (e.g., up-conversion) on the signal input from signal mapper 208, and outputs the signal after the radio transmission processing to antenna 201, for example.

### [Exemplary Operation of Base Station 100 and Terminal 200]

Next, an exemplary operation of base station 100 and terminal 200 described above will be described.

In the present embodiment, a case where a PRB size allocated to a PDSCH for RAR is used as a parameter related to the data size of RAR will be described.

For example, the minimum time interval (for example, "m'") between a PDSCH for RAR and a PUSCH for Msg 3 may be configured in a case where the number of allocation PRBs for the PDSCH for RAR is larger than a threshold (for example, "the number of PRBs equivalent to 5 MHz").

For example, in a case where the number of allocation PRBs for the PDSCH for RAR is larger than a threshold (for example, the number of PRBs corresponding to 5 MHz), the interval between the time resource for the PDSCH for RAR and the time resource for the PUSCH for Msg 3 may be configured to be equal to or larger than minimum time interval m'.

For example, when the number of allocation PRBs for the PDSCH for the RAR is larger than the threshold (for example, the number of PRBs corresponding to 5 MHz), base station 100 may determine the time resource for the PUSCH for Msg 3 such that the interval between the time resource for the PDSCH for the RAR and the time resource for the PUSCH for Msg 3 is equal to or larger than minimum time interval m'.

Further, for example, terminal 200 may assume (or expect, suppose) that the interval between the transmission (or scheduling, configuration) of Msg 3 (PUSCH) and the time resource for the PDSCH for RAR is an interval equal to or larger than minimum time interval m' in a case where the number of PRBs allocated to the PDSCH for RAR is larger than the threshold (for example, the number of PRBs corresponding to 5 MHz). Alternatively, terminal 200 does not need assume (or expect, suppose) transmission (or scheduling, configuration) of Msg 3 (PUSCH) at an interval shorter than minimum time interval m' from the time resource for PDSCH for RAR, for example.

Thus, even in a case where the data size of RAR is large (for example, in a case where the number of PRBs is larger than the threshold), terminal 200 (for example, the eRedCap terminal) can appropriately transmit Msg3 at a timing suitable for the processing capability of terminal 200.

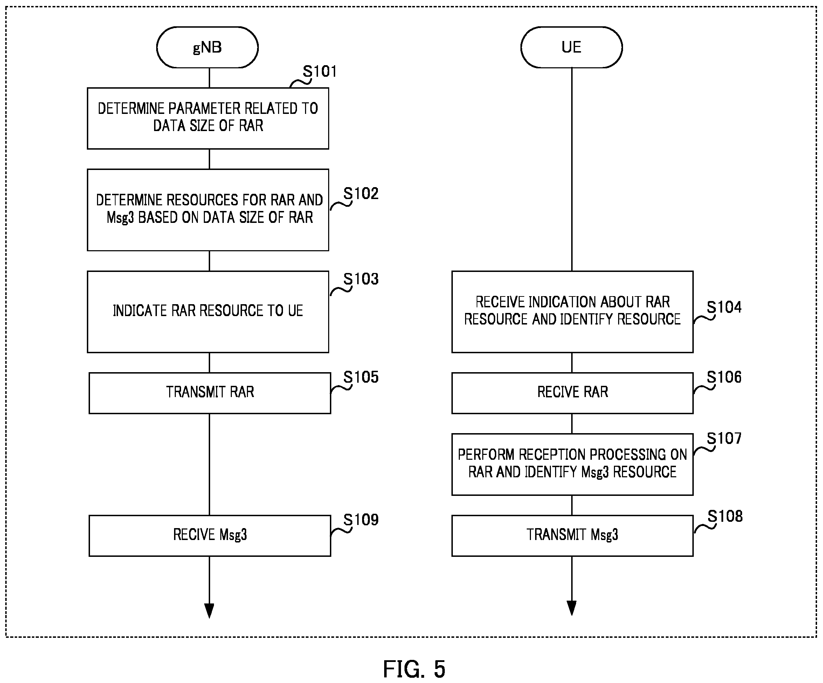

FIG. 5 is a flowchart illustrating exemplary processing of base station 100 (for example, gNB) and terminal 200 (for example, UE).

### <S101>

Base station 100 determines, for example, a parameter related to the data size of the RAR. The parameter related to the data size of the RAR may include at least the number of PRBs allocated to the PDSCH for transmitting the RAR. Further, the parameter related to the data size of the RAR may include, for example, at least one of a transport block (TB) size configured for the PDSCH for the RAR and a TB scaling factor used for determining the TB size configured for the PDSCH for the RAR.

### <S102>

Base station 100 determines the resource for PDSCH for RAR and the resource for PUSCH for Msg 3 based on a parameter (for example, the number of PRBs) related to the data size of RAR determined in S101, for example.

For example, the minimum time interval (m') between the PDSCH and PUSCH in a case where the number of PRBs allocated to PDSCH is larger than the "number of PRBs equivalent to 5 MHz" may be specified (or configured or defined).

In this case, base station 100 may allocate each resource for the PDSCH and the PUSCH such that minimum time interval (m') is ensured as an interval between a timing (for example, a symbol, a time, or a time unit) at which terminal 200 completes reception of the PDSCH having a PRB count larger than the "number of PRBs equivalent to 5 MHz" and a timing (for example, a symbol, a time, or a time unit) at which terminal 200 starts transmission of the PUSCH (for example, Msg 3). For example, the reception processing on the PDSCH (for example, RAR) may be performed in terminal 200 between the timing at which the reception of PDSCH is completed and the timing at which the transmission of PUSCH is started.

For example, base station 100 may allocate a PDSCH with a PRB count larger than the "number of PRBs equivalent to 5 MHz" to slot n and allocate a PUSCH to slot n + k'. Here, for example, the value of k' (for example, the slot length of k' slots) may be configured such that the interval between the PDSCH and the PUSCH is an interval equal to or larger than m' (for example, k' slots > m'). Base station 100 may determine information on the value of k', for example, as information on a resource for PUSCH for Msg 3.

Note that, the minimum time interval (m') may be set to a time interval between the PDSCH and PUSCH, for example, in a case where the number of PRBs allocated to PDSCH is larger than the "number of PRBs equivalent to 5 MHz". For example, the minimum time interval (m') may be configured based on the reception processing time (or reception processing capability) of RAR in an eRedCap terminal in a case where the number of allocation PRBs for PDSCH for RAR is larger than the "number of PRBs equivalent to 5 MHz".

For example, the larger the number of PRBs allocated for the PDSCH for RAR, the larger the data size of the RAR, and the longer the reception processing time for the RAR in the eRedCap terminal is likely to be. Accordingly, as an example, the minimum time interval (m') may be configured based on the upper limit value of the number of PRBs allocated for the PDSCH for RAR. Note that the minimum time interval (m') is not limited to being configured based on the upper limit value of the number of PRBs allocated for PDSCH for RAR, and may be configured based on any value that the number of PRBs allocated for RAR can take.

Further, for example, the minimum time interval (m') may be configured as the minimum time interval between the PDSCH and PUSCH in a case where the number of PRBs allocated to PDSCH is equivalent to 20 MHz or less. Note that the value of the number of PRBs, which serves as a reference for configuring the minimum time interval (m'), is not limited to the number of PRBs equivalent to 20 MHz, and may be the number of PRBs equivalent to another frequency band.

Further, for example, the minimum time interval (m') may be configured as the minimum time interval between the PDSCH and PUSCH in a case where the number of PRBs allocated to PDSCH is within a certain range (for example, more than the number of PRBs equivalent to 5 MHz and equal to or less than the number of PRBs equivalent to 20 MHz). Note that the range of the number of PRBs, which serves as a reference for configuring the minimum time interval (m'), is not limited to the range of the numbers of PRBs equivalent to 5 MHz to 20 MHz, and may be the number of PRBs corresponding to the range of another frequency bandwidth.

Further, a plurality of candidate configuration values are specified for the minimum time interval (m'), and for example, one of the plurality of candidate configuration values may be configured for terminal 200 according to the number of PRBs allocated to the PDSCH.

### <S103/S104>

Base station 100 may transmit (for example, indicate, configure) information on the PDSCH resource for RAR determined in S102 to terminal 200. The information on the PDSCH resource for RAR may be indicated to terminal 200 by, for example, a PDCCH (for example, DCI). At this time, the PDCCH may be scrambled using, for example, a Random Access - Radio Network Temporary Identifier (RA-RNTI).

Terminal 200 may, for example, receive the information on the PDSCH resource for RAR indicated by base station 100, and identify the PDSCH resource for RAR based on the received information.

### <S105/S106>

Base station 100 transmits the RAR to terminal 200 in the PDSCH resource indicated in, for example, S103. The RAR may include, for example, information on a PUSCH resource for Msg3 determined in S102 (for example, information on k').

Terminal 200 receives the RAR in the PDSCH resource identified in, for example, S104.

### <S107>

Terminal 200 performs, for example, reception processing on the RAR and identifies the PUSCH resource for Msg.3 based on information included in the RAR.

At this time, terminal 200 may assume that each resource of the PDSCH and PUSCH is configured such that a minimum time interval (m') is secured as an interval between a timing (for example, a symbol or a time) at which the reception of PDSCH with the number of PRBs larger than the "number of PRBs equivalent to 5 MHz" is completed and a timing (for example, a symbol or a time) at which the transmission of PUSCH (for example, Msg 3) is started. Alternatively, when terminal 200 receives the PDSCH with the number of PRBs larger than the "number of PRBs equivalent to 5 MHz," the terminal may not assume the reception of the PDSCH and the transmission of the PUSCH at an interval shorter than the minimum time interval (m').

For example, in a case where the number of allocation PRBs of PDSCH mapped to slot n is larger than the "number of PRBs equivalent to 5 MHz", terminal 200 may assume that the value of k' causing the interval between the PDSCH and PUSCH to be equal to or larger than minimum time interval m' is indicated for slot n + k' to which the PUSCH resource is mapped. Terminal 200 may assume, for example, that the length of k' slots (or the slot interval between the PDSCH and PUSCH) is larger than m'.

Note that terminal 200 may identify the number of PRBs allocated to the PDSCH based on, for example, control information received in advance or control information received using the PDCCH described above.

### <S108/S109>

Terminal 200 transmits Msg 3 to base station 100 using the PUSCH resource identified in, for example, S107.

Base station 100 receives Msg 3 in the PUSCH resource determined in, for example, S102.

According to the exemplary operation described above, for example, even in a case where the number of PRBs allocated for the PDSCH for RAR is larger than the "number of PRBs equivalent to 5 MHz" and the reception processing time for the RAR in the eRedCap terminal is likely to be long, base station 100 can allocate, to the PUSCH for Msg 3, the time resource for the PUSCH for Msg 3 in consideration of the data size of the RAR (or the reception processing on the RAR in the eRedCap terminal). Thus, terminal 200 (for example, an eRedCap terminal) can transmit Msg3 at an appropriate timing suitable for the processing capability of the eRedCap terminal based on the allocation information included in the received RAR.

### <Other Exemplary Operation >

In the above exemplary operation, the resource allocation of PUSCH in a case where the number of PRBs allocated to PDSCH is larger than the "number of PRBs equivalent to 5 MHz" has been described.

Here, the resource allocation of PUSCH in a case where the number of allocation PRBs for PDSCH is equal to or less than the "number of PRBs equivalent to 5 MHz" will be described.

For example, in a case where the number of PRBs allocated to the PDSCH is equal to or less than the "number of PRBs equivalent to 5 MHz", the time resource for the PUSCH may be allocated based on an existing allocation method (for example, a method that does not consider the minimum time interval (m') or k').

Alternatively, for example, in a case where the number of allocation PRBs for PDSCH is equal to or less than the "number of PRBs equivalent to 5 MHz", the time resource interval between the PDSCH and PUSCH may be set to an interval shorter than the minimum time interval (m'). For example, in a case where the PDSCH is allocated to slot n, the interval between the PDSCH and PUSCH may be configured to be less than m' for slot n + k to which the PUSCH is allocated. Here, the value of k (for example, the slot length of k slots) may be configured such that the interval between the PDSCH and the PUSCH is less than m' (for example, k slots < m'). Base station 100 may indicate to terminal 200 information on the value of k as information on the resource for PUSCH for Msg 3, for example.

Alternatively, for example, the minimum time interval (m) between the PDSCH and PUSCH may be defined in a case where the number of allocation PRBs for PDSCH is equal to or less than the "number of PRBs equivalent to 5 MHz". The minimum time interval (m) may be configured to be smaller than the minimum time interval (m').

For example, base station 100 may allocate each resource of the PDSCH and PUSCH such that a minimum time interval (m) is ensured as an interval between a timing (for example, a symbol or a time) at which terminal 200 completes reception of the PDSCH with the number of PRBs equal to or less than "5 MHz equivalent PRB number" and a timing (for example, a symbol or a time) at which terminal 200 starts transmission of the PUSCH (for example, Msg 3).

Further, for example, terminal 200 may assume that each resource of the PDSCH and the PUSCH is configured such that the minimum time interval (m) is ensured as an interval between a timing (for example, a symbol or a time) at which the reception of the PDSCH with the number of PRBs equal to or less than "number of PRBs equivalent to 5 MHz" is completed and a timing (for example, a symbol or a time) at which the transmission of the PUSCH (for example, Msg 3) is started. Alternatively, when terminal 200 receives the PDSCH with the number of PRBs equal to or less than the "number of PRBs equivalent to 5 MHz," the terminal may not assume the reception of the PDSCH and the transmission of the PUSCH at an interval shorter than the minimum time interval (m).

For example, in a case where the number of PRBs allocated to the PDSCH in slot n is equal to or less than the "number of PRBs equivalent to 5 MHz", the PUSCH resource may be allocated to slot n + k. At this time, a value of k may be configured such that the interval between the PDSCH and PUSCH is equal to or greater than m, and the value of k may be indicated to terminal 200. For example, the length of the k slots may be configured to be larger than m.

In these methods, when the number of allocation PRBs for the PDSCH for RAR is equal to or less than the "number of PRBs equivalent to 5 MHz," it is assumed that the reception processing time in terminal 200 (for example, eRedCap terminal) is relatively short. Therefore, terminal 200 can transmit Msg3 at an earlier timing compared to when the number of allocation PRBs for the PDSCH for RAR is greater than the "number of PRBs equivalent to 5 MHz."

Note that, for example, the transmission timing of PUSCH may be dynamically configured (or switched, changed) according to the number of PRBs allocated to PDSCH. For example, the time resource interval between the PDSCH for RAR and the PUSCH for Msg 3 may be different depending on the number of PRBs allocated to the PDSCH. For example, when the number of PRBs allocated to the PDSCH in slot n is equal to or less than the "number of PRBs equivalent to 5 MHz," terminal 200 may transmit the PUSCH in slot n + k. Conversely, when the number of PRBs allocated to the PDSCH in slot n is greater than the "number of PRBs equivalent to 5 MHz," terminal 200 may transmit the PUSCH in slot n + k'. As described above, by dynamically switching the transmission timing of PUSCH according to the number of allocation PRBs for PDSCH, terminal 200 can appropriately transmit Msg 3 at a timing corresponding to the data size (for example, the number of PRBs) of the RAR.

Further, a time interval between the PDSCH and PUSCH, for example, taking into account the case where the number of PRBs allocated to PDSCH is equal to or less than the "number of PRBs equivalent to 5 MHz" may be configured as the minimum time interval (m). For example, the minimum time interval between the PDSCH and PUSCH in the case where the number of allocated PRBs for PDSCH is equal to or less than the number of PRBs equivalent to 5 MHz may be configured as the minimum time interval (m). Further, a plurality of candidate configuration values are specified for the minimum time interval (m), and for example, one of the plurality of candidate configuration values may be configured for terminal 200 according to the number of allocation PRBs configured for the PDSCH.

Exemplary operations of base station 100 and terminal 200 have been described above.

As described above, in the present embodiment, base station 100 transmits the PDSCH for RAR and receives the PUSCH for Msg 3 after transmitting the PDSCH for RAR. Further, terminal 200 receives the PDSCH for RAR and transmits the PUSCH for Msg 3 after receiving the PDSCH for RAR. At this time, the transmission timing of the PUSCH for Msg 3 is different depending on a parameter (for example, the number of PRBs) related to the resource size of the PDSCH for the RAR.

Thus, the eRedCap terminal can transmit Msg 3 at an appropriate timing according to the processing capability of the eRedCap terminal (for example, the RAR reception processing capability) in accordance with the data size of the PDSCH for RAR, for example. Thus, according to the present embodiment, the uplink transmission timing for terminal 200 can be appropriately configured.

Note that, in the present embodiment, a case where "the number of PRBs equivalent to 5 MHz" is used as the number of PRBs that serves as a reference in determining the transmission timing of PUSCH has been described, but the present disclosure is not limited thereto, and another number of PRBs may be used.

### (Embodiment 2)

Base station 100 and terminal 200 according to the present embodiment may be the same as those in Embodiment 1.

In the present embodiment, a case where the TB size of a PDSCH for RAR is used as a parameter related to the data size of RAR will be described.

For example, the minimum time interval (for example, "m'") between the PDSCH for RAR and the PUSCH for Msg 3 for a case where the TB size of the PDSCH for RAR is larger than a threshold may be configured.

For example, in a case where the TB size of the PDSCH for RAR is larger than the threshold, an interval between a time resource for the PDSCH for RAR and a time resource for the PUSCH for Msg 3 may be configured to be equal to or larger than minimum time interval m'.

For example, when the TB size of the PDSCH for RAR is larger than the threshold, base station 100 may determine the time resource for the PUSCH for Msg 3 such that the interval between the time resource for the PDSCH for RAR and the time resource for the PUSCH for Msg 3 is equal to or larger than minimum time interval m'.

Further, for example, terminal 200 may assume (or expect, suppose) that the transmission (or scheduling, configuration) of Msg 3 (PUSCH) is performed with an interval between the time resource for PDSCH for RAR and the time resource for PDSCH for RAR being an interval equal to or larger than minimum time interval m' in a case where the TB size of PDSCH for RAR is larger than the threshold. Alternatively, terminal 200 may not assume (or expect, suppose) transmission (or scheduling, configuration) of Msg 3 (PUSCH) at an interval shorter than minimum time interval m' between the time resource for PDSCH for RAR and the transmission of Msg 3, for example.

Thus, even in a case where the data size of RAR is large (for example, in a case where the TB size is larger than the threshold), terminal 200 (for example, an eRedCap terminal) can appropriately transmit Msg3 at a timing suitable for the processing capability of terminal 200.

The exemplary processing of base station 100 (for example, gNB) and terminal 200 (for example, UE) according to the present embodiment may be the same as the exemplary processing of Embodiment 1 illustrated in FIG. 5.

### <S101>

Base station 100 determines, for example, a parameter related to the data size of the RAR. The parameter related to the data size of the RAR may include at least the TB size of the PDSCH for the RAR. Further, the parameter related to the data size of the RAR may include, for example, at least one of the number of allocation PRBs for the PDSCH for the RAR and a TB scaling factor used for determining the TB size configured for the PDSCH for the RAR.

### <S102>

Base station 100 determines the resource for PDSCH for RAR and the resource for PUSCH for Msg 3 based on the parameter (for example, TB size) related to the data size of RAR determined in S101, for example.

For example, the minimum time interval (m') between the PDSCH and PUSCH in a case where the TB size of PDSCH is larger than the threshold may be specified (or configured, defined).

Note that the threshold for the TB size of the PDSCH may be, for example, 1,000 bits or another value. The threshold may be specified in a standard, may be pre-configured for terminal 200, or may be indicated (or configured) by base station 100 to terminal 200.

In this case, base station 100 may allocate each resource of the PDSCH and PUSCH such that the minimum time interval (m') is ensured as the interval between the timing (for example, symbol, or time, or time unit) at which terminal 200 completes the reception of PDSCH having a TB size larger than the threshold and the timing (for example, symbol, or time, or time unit) at which terminal 200 starts the transmission of PUSCH (for example, Msg 3). For example, the reception processing on the PDSCH (for example, RAR) may be performed in terminal 200 between the timing at which the reception of PDSCH is completed and the timing at which the transmission of PUSCH is started.

For example, base station 100 may allocate a PDSCH having a TB size larger than the threshold to slot n and allocate a PUSCH to slot n + k'. Here, for example, the value of K' (for example, the slot length of k' slots may be configured such that the interval between the PDSCH and PUSCH is equal to or greater than m' (for example, k' slots > m')). Base station 100 may determine information on the value of k', for example, as information on a resource for PUSCH for Msg 3.

Note that, for example, a time interval between the PDSCH and PUSCH taking into account the case where the TB size of PDSCH is larger than a threshold may be configured as the minimum time interval (m'). For example, the minimum time interval (m') may be configured based on the reception processing time (or reception processing capability) for RAR in an eRedCap terminal in a case where the TB size of the PDSCH for RAR is larger than a threshold.

For example, the larger the TB size of the PDSCH for RAR, the larger the data size of the RAR, and the longer the reception processing time for the RAR in the eRedCap terminal is likely to be. Accordingly, as an example, the minimum time interval (m') may be configured based on the upper limit value of the TB size of the PDSCH for RAR. Note that the minimum time interval (m') is not limited to configuration based on the upper limit value of the TB size of the PDSCH for RAR, and may be configured based on any value that the TB size can take.

Further, for example, the minimum time interval between the PDSCH and PUSCH in a case where the TB size of PDSCH is equal to or less than a defined value (for example, 4,000 bits) may be configured as the minimum time interval (m'). Note that the value of the TB size, which serves as a reference for configuring the minimum time interval (m'), is not limited to 4,000 bits and may be another size.

Further, for example, the minimum time interval (m') may be configured as the minimum time interval between the PDSCH and PUSCH in a case where the TB size of PDSCH is within a certain range (for example, more than 1,000 bits and 4,000 bits or less). Note that the range of the TB size, which serves as the reference for configuring the minimum time interval (m'), is not limited to the range of 1,000 bits to 4,000 bits, and may be another range of the TB size.

Further, a plurality of candidates for a configuration value of the minimum time interval (m') may be specified, and one of the candidates for the configuration value may be configured for terminal 200 according to, for example, the TB size of the PDSCH.

### <S103/S104>

Base station 100 may transmit (for example, indicate, configure) information on the PDSCH resource for RAR determined in S102 to terminal 200. Information on the PDSCH resource for RAR may be indicated to terminal 200 by, for example, a PDCCH (for example, DCI). At this time, the PDCCH may be scrambled using, for example, RA-RNTI.

Terminal 200 may, for example, receive the information on the PDSCH resource for RAR indicated by base station 100, and identify the PDSCH resource for RAR based on the received information.

### <S105/S106>

Base station 100 transmits the RAR to terminal 200 in the PDSCH resource indicated in, for example, S103. The RAR may include, for example, the information on the PUSCH resource for Msg3 determined in S102 (for example, information on k').

Terminal 200 receives the RAR in the PDSCH resource identified in, for example, S104.

### <S107>

Terminal 200 performs, for example, reception processing on the RAR and identifies the PUSCH resource for Msg.3 based on the information included in the RAR.

At this time, terminal 200 may assume that each resource of the PDSCH and PUSCH is configured such that the minimum time interval (m') is secured as an interval between a timing (for example, a symbol or a time) at which terminal 200 completes reception of the PDSCH having a TB size larger than the threshold and a timing (for example, a symbol or a time) at which terminal 200 starts transmission of the PUSCH (for example, Msg 3). Alternatively, when terminal 200 receives the PDSCH with a TB size larger than the threshold, it may not assume the reception of the PDSCH and the transmission of the PUSCH at an interval shorter than the minimum time interval (m').

For example, terminal 200 may assume that, in a case where the TB size of the PDSCH mapped to slot n is larger than the threshold, the value of k' causing the interval between the PDSCH and the PUSCH to be equal to or larger than minimum time interval m' is indicated for slot n + k' to which the PUSCH resource is mapped. Terminal 200 may assume, for example, that the length of k' slots (or the slot interval between the PDSCH and PUSCH) is larger than m'.

Note that terminal 200 may identify the TB size of the PDSCH based on, for example, control information received in advance or control information received using the PDCCH described above.

### <S108/S109>

Terminal 200 transmits Msg 3 to base station 100 in the PUSCH resource identified in, for example, S107.

Base station 100 receives Msg 3 in the PUSCH resource determined in, for example, S102.

According to the exemplary operation described above, for example, even in a case where the TB size of the PDSCH for RAR is larger than the threshold and the reception processing time for RAR in the eRedCap terminal is likely to be long, base station 100 can allocate the time resource for the PUSCH for Msg 3 in consideration of the data size of RAR (or the reception processing for RAR in the eRedCap terminal) for the PUSCH for Msg 3. Thus, terminal 200 (for example, the eRedCap terminal) can transmit Msg3 at an appropriate timing suitable for the processing capability of the eRedCap terminal based on the allocation information included in the received RAR.

### <Other Exemplary Operation>

In the above exemplary operation, the resource allocation of PUSCH in a case where the TB size of PDSCH is larger than the threshold has been described.

Here, resource allocation for PUSCH in a case where the TB size of PDSCH is equal to or smaller than a threshold will be described.

For example, in a case where the TB size of the PDSCH is equal to or smaller than the threshold, the time resource for the PUSCH may be allocated based on an existing allocation method (for example, a method that does not consider the minimum time interval (m') or k').

Alternatively, for example, in a case where the TB size of the PDSCH is equal to or smaller than the threshold, the time resource interval between the PDSCH and the PUSCH may be set to an interval shorter than the minimum time interval (m'). For example, in a case where the PDSCH is allocated to slot n, the interval between the PDSCH and PUSCH may be configured to be less than m' for slot n + k to which the PUSCH is allocated. Here, the value of k (for example, the slot length of k slots) may be configured such that the interval between the PDSCH and the PUSCH is less than m' (for example, k slots < m'). Base station 100 may indicate to terminal 200 the information on the value of k as information on the resource for PUSCH for Msg 3, for example.

Alternatively, the minimum time interval (m) between the PDSCH and PUSCH in a case where the TB size of PDSCH is equal to or smaller than the threshold may be defined, for example. The minimum time interval (m) may be configured to be smaller than the minimum time interval (m').

For example, base station 100 may allocate each resource of the PDSCH and PUSCH such that the minimum time interval (m) is ensured as the interval between the timing (for example, a symbol or a time) at which terminal 200 completes reception of PDSCH having a TB size equal to or smaller than the threshold and the timing (for example, a symbol or a time) at which terminal 200 starts transmission of PUSCH (for example, Msg 3).

Further, for example, terminal 200 may assume that each resource of the PDSCH and PUSCH is configured such that the minimum time interval (m) is ensured as the interval between the timing (for example, a symbol or a time) at which the reception of PDSCH having a TB size equal to or smaller than the threshold is completed and the timing (for example, a symbol or a time) at which the transmission of PUSCH (for example, Msg 3) is started. Alternatively, when terminal 200 receives the PDSCH having a TB size equal to or less than the threshold, terminal 200 may not assume the reception of the PDSCH and the transmission of the PUSCH at an interval shorter than the minimum time interval (m).

For example, in a case where the TB size of the PDSCH mapped to slot n is equal to or smaller than the threshold, the PUSCH resource may be allocated to slot n + k. At this time, a value of k may be configured such that the interval between the PDSCH and PUSCH is equal to or greater than m, and the value of k may be indicated to terminal 200. For example, the length of the k slots may be configured to be larger than m.

In these methods, it is assumed that the reception processing time in terminal 200 (for example, an eRedCap terminal) is relatively short when the TB size of the PDSCH for RAR is equal to or less than the threshold. Therefore, terminal 200 can transmit Msg3 at an earlier timing compared to when the TB size of the PDSCH for RAR is greater than the threshold.

Note that, for example, the transmission timing of PUSCH may be dynamically configured (or switched, varied) according to the TB size of PDSCH. For example, the time resource interval between the PDSCH for RAR and the PUSCH for Msg 3 may be different depending on the TB size of the PDSCH. For example, when the TB size of the PDSCH mapped to slot n is equal to or smaller than the threshold, terminal 200 may transmit the PUSCH in slot n + k, and when the TB size of the PDSCH mapped to slot n is larger than the threshold, terminal 200 may transmit the PUSCH in slot n + k'. As described above, by dynamically switching the transmission timing of PUSCH according to the TB size of PDSCH, terminal 200 can appropriately transmit Msg 3 at a timing corresponding to the data size (for example, TB size) of RAR.

Further, the minimum time interval (m) may be set to a time interval between the PDSCH and PUSCH, considering, for example, the case where the TB size of PDSCH is equal to or smaller than the threshold. For example, a minimum time interval between the PDSCH and PUSCH for a case where the TB size of PDSCH is 1,000 bits or less may be configured as the minimum time interval (m). Further, a plurality of candidate configuration values are specified for the minimum time interval (m), and for example, one of the plurality of candidate configuration values may be configured for terminal 200 according to the TB size configured for the PDSCH.

The exemplary operations of base station 100 and terminal 200 have been described above.

As described above, in the present embodiment, base station 100 transmits the PDSCH for RAR and receives the PUSCH for Msg 3 after transmitting the PDSCH for RAR. Further, terminal 200 receives the PDSCH for RAR and transmits the PUSCH for Msg 3 after receiving the PDSCH for RAR. At this time, the transmission timing of the PUSCH for Msg 3 is different depending on a parameter (for example, TB size) related to the resource size of the PDSCH for the RAR.

Thus, the eRedCap terminal can transmit Msg 3 at an appropriate timing according to the processing capability of the eRedCap terminal (for example, the reception processing capability for RAR) in accordance with the data size of the PDSCH for RAR, for example. Thus, according to the present embodiment, the uplink transmission timing for terminal 200 can be appropriately configured.

Note that, in the present embodiment, the TB size (for example, threshold) that serves as a reference for determining the transmission timing of the PUSCH may be determined in accordance with the characteristics or capabilities of the eRedCap terminal.

### (Embodiment 3)

Base station 100 and terminal 200 according to the present embodiment may be the same as those in Embodiment 1.

In the present embodiment, a case where a TB scaling factor (also referred to as a scaling factor) used for calculating (or determining) the TB size of a PDSCH for RAR is used as a parameter related to the data size of RAR will be described.

For example, the minimum time interval (for example, "m'") between the PDSCH for RAR and the PUSCH for Msg 3 in a case where the TB scaling factor of the PDSCH for RAR is larger than a threshold may be configured.

For example, in the case where the TB scaling factor for the PDSCH for RAR is larger than the threshold, the interval between the time resource for the PDSCH for RAR and the time resource for the PUSCH for Msg 3 may be configured to be equal to or larger than minimum time interval m'.

For example, base station 100 may determine the time resource for the PUSCH for Msg 3 such that the interval between the time resource for the PDSCH for the RAR and the time resource for the PUSCH for Msg 3 is equal to or larger than minimum time interval m' in the case where the TB scaling factor for the PDSCH for the RAR is larger than the threshold.

Further, for example, terminal 200 may assume (or expect, suppose) that the transmission (or scheduling, configuration) of Msg 3 (PUSCH) is performed at an interval equal to or larger than minimum time interval m' with respect to the time resource for the PDSCH for RAR in the case where the TB scaling factor for the PDSCH for RAR is larger than the threshold. Alternatively, terminal 200 may not assume (or expect, suppose) transmission (or scheduling, configuration) of Msg 3 (PUSCH) at an interval shorter than minimum time interval m' with respect to the time resource for PDSCH for RAR, for example.

Thus, even in a case where the data size of RAR is large (for example, in a case where the TB scaling factor is larger than the threshold), terminal 200 (for example, an eRedCap terminal) can appropriately transmit Msg3 at a timing suitable for the processing capability of terminal 200.

The exemplary processing of base station 100 (for example, gNB) and terminal 200 (for example, UE) according to the present embodiment may be the same as the exemplary processing of Embodiment 1 illustrated in FIG. 5.

### <S101>

Base station 100 determines, for example, a parameter related to the data size of the RAR. The parameter related to the data size of the RAR may include at least the TB scaling factor used for determining the TB size configured for the PDSCH for the RAR. Further, the parameter related to the data size of the RAR may include, for example, at least one of the number of PRBs allocated to the PDSCH for the RAR and the TB size configured for the PDSCH for the RAR.

### <S102>

Base station 100 determines the resource for PDSCH for RAR and the resource for PUSCH for Msg 3 based on the parameter (for example, TB scaling factor) related to the data size of RAR determined in S101, for example.

For example, the minimum time interval (m') between the PDSCH and PUSCH in the case where the TB scaling factor of PDSCH is larger than the threshold may be specified (or configured, defined).

Note that the threshold for the TB scaling factor of the PDSCH may be, for example, 0.5 or another value. The threshold may be specified in a standard, may be pre-configured in terminal 200, or may be indicated (or configured) by base station 100 to terminal 200.

In this case, base station 100 may allocate each resource of the PDSCH and PUSCH such that the minimum time interval (m') is ensured as the interval between the timing (for example, symbol, time, or time unit) at which terminal 200 completes the reception of PDSCH for which a TB scaling factor larger than the threshold is configured and the timing (for example, symbol, time, or time unit) at which terminal 200 starts the transmission of PUSCH (for example, Msg 3). For example, the reception processing on the PDSCH (for example, RAR) may be performed in terminal 200 between the timing at which the reception of PDSCH is completed and the timing at which the transmission of PUSCH is started.

For example, base station 100 may allocate, to slot n, a PDSCH for which a TB scaling factor larger than the threshold is configured, and may allocate a PUSCH to slot n + k'. Here, for example, the value of K' (for example, the slot length of k' slots) may be configured such that the interval between the PDSCH and PUSCH is equal to or greater than m' (for example, k' slots > m')). Base station 100 may determine information on the value of k', for example, as information on a resource for PUSCH for Msg 3.

Note that, a time interval between the PDSCH and PUSCH, for example, taking into account the case where the TB scaling factor configured for PDSCH is larger than the threshold may be configured as the minimum time interval (m'). For example, the minimum time interval (m') may be configured based on the reception processing time (or reception processing capability) for RAR in an eRedCap terminal in the case where the TB scaling factor configured for PDSCH for RAR is larger than the threshold.

For example, the larger the TB scaling factor used for determining the TB size of the PDSCH for RAR, the larger the data size of the RAR, and the longer the reception processing time for the RAR in the eRedCap terminal tends to be. Accordingly, as an example, the minimum time interval (m') may be configured based on the upper limit value of the TB scaling factor configured for the PDSCH for RAR. Note that the minimum time interval (m') is not limited to configuration based on the upper limit value of the TB scaling factor configured for the PDSCH for RAR, and may be configured based on any value that the TB scaling factor can take.

Further, for example, the minimum time interval between the PDSCH and PUSCH in a case where the TB scaling factor of PDSCH is equal to or less than a defined value (e.g., 1) may be configured as the minimum time interval (m'). Note that the value of the TB scaling factor, which serves as a reference for configuring the minimum time interval (m'), is not limited to 1 and may be another value.

Further, for example, the minimum time interval between the PDSCH and PUSCH in a case where the TB scaling factor of PDSCH is within a certain range (for example, greater than 0.5 and less than or equal to 1) may be configured as the minimum time interval (m'). Note that the range of the TB scaling factor, which serves as a reference for configuring the minimum time interval (m'), is not limited to the range of 0.5 to 1, and may be another range of the TB scaling factor.

Further, a plurality of candidates for a configuration value of the minimum time interval (m') may be specified, and one of the candidates for the configuration value may be configured for terminal 200 according to, for example, the TB scaling factor of the PDSCH.

### <S103/S104>

Base station 100 may transmit (for example, indicate, configure) information on the PDSCH resource for RAR determined in S102 to terminal 200. The information on the PDSCH resource for RAR may be indicated to terminal 200 by, for example, a PDCCH (for example, DCI). At this time, the PDCCH may be scrambled using, for example, RA-RNTI.

Terminal 200 may, for example, receive information on a PDSCH resource for RAR indicated by base station 100, and identify the PDSCH resource for RAR based on the received information.

### <S105/S106>

Base station 100 transmits the RAR to terminal 200 in the PDSCH resource indicated in, for example, S103. The RAR may include, for example, the information on the PUSCH resource for Msg3 determined in S102 (for example, information on k').

Terminal 200 receives the RAR in the PDSCH resource identified in, for example, S104.

### <S107>

Terminal 200 performs, for example, reception processing on the RAR and identifies the PUSCH resource for Msg.3 based on the information included in the RAR.

At this time, it may be assumed that each resource of the PDSCH and PUSCH is configured such that the minimum time interval (m') is secured as the interval between the timing (for example, a symbol or a time) at which terminal 200 completes reception of PDSCH for which a TB scaling factor larger than the threshold is configured and the timing (for example, a symbol or a time) at which terminal 200 starts transmission of PUSCH (for example, Msg 3). Alternatively, in a case where terminal 200 receives a PDSCH for which a TB scaling factor larger than the threshold is configured, terminal 200 may not assume the reception of the PDSCH and the transmission of the PUSCH at an interval shorter than the minimum time interval (m').

For example, terminal 200 may assume that, in a case where the TB scaling factor of the PDSCH mapped to slot n is larger than the threshold, the value of k' causing the interval between the PDSCH and the PUSCH to be equal to or larger than minimum time interval m' is indicated for slot n + k' to which the PUSCH resource is mapped. Terminal 200 may assume, for example, that the length of k' slots (or the slot interval between the PDSCH and PUSCH) is larger than m'.

Note that terminal 200 may identify the TB scaling factor of the PDSCH based on, for example, control information received in advance or control information received using the PDCCH described above.

### <S108/S109>

Terminal 200 transmits Msg 3 to base station 100 in the PUSCH resource identified in, for example, S107.

Base station 100 receives Msg 3 in the PUSCH resource determined in, for example, S102.

According to the exemplary operation described above, for example, even in a case where the TB scaling factor for the PDSCH for RAR is larger than the threshold and the reception processing time for RAR in the eRedCap terminal is likely to be long, base station 100 can allocate, to the PUSCH for Msg 3, the time resource for the PUSCH for Msg 3 in consideration of the data size of RAR (or the reception processing on RAR in the eRedCap terminal). Thus, terminal 200 (for example, an eRedCap terminal) can transmit Msg3 at an appropriate timing suitable for the processing capability of the eRedCap terminal based on the allocation information included in the received RAR.

### <Other Exemplary Operation>

In the above exemplary operation, the resource allocation of PUSCH in a case where the TB scaling factor of PDSCH is larger than the threshold has been described.

Here, the resource allocation for PUSCH in a case where the TB scaling factor of PDSCH is equal to or less than the threshold will be described.

For example, in a case where the TB scaling factor of the PDSCH is equal to or less than the threshold, the time resource for the PUSCH may be allocated based on an existing allocation method (for example, a method that does not consider the minimum time interval (m') or k').

Alternatively, for example, in a case where the TB scaling factor of the PDSCH is equal to or less than the threshold, the time resource interval between the PDSCH and the PUSCH may be set to an interval shorter than the minimum time interval (m'). For example, in a case where the PDSCH is allocated to slot n, the interval between the PDSCH and PUSCH may be configured to be less than m' for slot n + k to which PUSCH is allocated. Here, the value of k (for example, the slot length of k slots) may be configured such that the interval between the PDSCH and the PUSCH is less than m' (for example, k slots < m'). Base station 100 may indicate, to terminal 200, information on the value of k as information on a resource for PUSCH for Msg 3, for example.

Alternatively, the minimum time interval (m) between the PDSCH and PUSCH in a case where the TB scaling factor of PDSCH is equal to or less than the threshold may be specified, for example. The minimum time interval (m) may be configured to be smaller than the minimum time interval (m').

For example, base station 100 may allocate each resource of the PDSCH and PUSCH such that the minimum time interval (m) is ensured as the interval between the timing (for example, a symbol or a time) at which terminal 200 completes reception of PDSCH for which a TB scaling factor equal to or less than the threshold is configured and the timing (for example, a symbol or a time) at which terminal 200 starts transmission of PUSCH (for example, Msg 3).

Further, for example, terminal 200 may assume that each resource of the PDSCH and PUSCH is configured such that the minimum time interval (m) is ensured as the interval between the timing (for example, a symbol or a time) at which the reception of PDSCH for which a TB scaling factor equal to or less than the threshold is configured is completed and the timing (for example, a symbol or a time) at which the transmission of PUSCH (for example, Msg 3) is started. Alternatively, when terminal 200 receives a PDSCH with a TB scaling factor equal to or less than the threshold, the terminal may not assume the reception of the PDSCH and the transmission of the PUSCH at an interval shorter than the minimum time interval (m).

For example, when the TB scaling factor of the PDSCH mapped to slot n is equal to or less than the threshold, the PUSCH resource may be allocated to slot n + k. At this time, a value of k may be configured such that the interval between the PDSCH and the PUSCH is equal to or greater than m, and may be indicated to terminal 200. For example, the length of the k slots may be configured to be larger than m.

In these methods, when the TB scaling factor of the PDSCH for RAR is equal to or less than the threshold, it is assumed that the reception processing time in terminal 200 (for example, eRedCap terminal) is relatively short. Therefore, terminal 200 can transmit Msg3 at an earlier timing compared to when the TB scaling factor of the PDSCH for RAR is greater than the threshold.

Note that, for example, the transmission timing of PUSCH may be dynamically configured (or switched, changed) according to the TB scaling factor of PDSCH. For example, the time resource interval between the PDSCH for RAR and the PUSCH for Msg 3 may be different depending on the TB scaling factor of the PDSCH. For example, when the TB scaling factor of the PDSCH mapped to slot n is equal to or less than the threshold, terminal 200 may transmit the PUSCH in slot n + k, and when the TB size of the PDSCH mapped to slot n is larger than the threshold, terminal 200 may transmit the PUSCH in slot n + k'. As described above, by dynamically switching the transmission timing of PUSCH according to the TB scaling factor configured for PDSCH, terminal 200 can appropriately transmit Msg 3 at a timing corresponding to the data size of RAR (for example, the TB scaling factor).

Further, for example, a time interval between the PDSCH and PUSCH, taking into account the case where the TB scaling factor configured for PDSCH is equal to or less than the threshold may be configured as the minimum time interval (m). For example, the minimum time interval between the PDSCH and PUSCH in a case where the TB scaling factor of PDSCH is 0.5 or less may be configured as the minimum time interval (m). Further, a plurality of candidate configuration values are specified for the minimum time interval (m), and for example, one of the plurality of candidate configuration values may be configured for terminal 200 according to the TB scaling factor configured for the PDSCH.

The exemplary operations of base station 100 and terminal 200 have been described above.

As described above, in the present embodiment, base station 100 transmits the PDSCH for RAR and receives the PUSCH for Msg 3 after transmitting the PDSCH for RAR. Further, terminal 200 receives the PDSCH for RAR and transmits the PUSCH for Msg 3 after receiving the PDSCH for RAR. At this time, the transmission timing of the PUSCH for Msg 3 is different depending on a parameter related to the resource size of the PDSCH for the RAR (for example, TB scaling factor).

Thus, the eRedCap terminal can transmit Msg 3 at an appropriate timing according to the processing capability of the eRedCap terminal (for example, the reception processing capability for RAR) in accordance with the data size of the PDSCH for RAR, for example. Thus, according to the present embodiment, the uplink transmission timing for terminal 200 can be appropriately configured.

Note that, in the present embodiment, the TB scaling factor (for example, the threshold) that serves as a reference for determining the transmission timing of PUSCH may be determined in accordance with the characteristics or capabilities of the eRedCap terminal.

The embodiments of the present disclosure have been described, thus far.

### (Other Embodiments)

(1) In each of the above-described embodiments, base station 100 may apply the operation based on the data size of the RAR described above in a case where base station 100 permits a connection from an eRedCap terminal in a cell of base station 100. For example, the transmission timing configuration for PUSCH for Msg 3 according to a parameter related to the data size of RAR may be applied in a case where the cell permits access by the eRedCap terminal (for example, a terminal with a restricted capability). That is, in a case where base station 100 prohibits connection from the eRedCap terminal in the cell of base station 100, base station 100 may not apply the transmission timing configuration for PUSCH for Msg 3 according to the parameter related to the data size of the RAR described above.

Thus, in a case where the connection from the eRedCap terminal is prohibited, the transmission timing of the PUSCH is determined regardless of the parameter of the RAR, and thus, the PUSCH transmission timing from a non-eRedCap terminal may be advanced. Thus, in a cell where both eRedCap terminals and non-eRedCap terminals coexist, the impact on non-eRedCap terminals can be reduced.

(2) In each of the above-described embodiments, the transmission timing configuration for PUSCH for Msg 3 according to the parameter related to the data size of the RAR described above may be applied to the PDSCH and PUSCH allocated for terminal 200 regarded (recognized) by base station 100 as an eRedCap terminal. On the other hand, the transmission timing configuration for Msg 3 PUSCH based on the parameter related to the data size of the RAR described above may not be applied to the PDSCH and PUSCH allocated to terminal 200 not regarded an eRedCap terminal by base station 100.

Whether terminal 200 is a terminal that base station 100 regards to be an eRedCap terminal can be determined, for example, based on whether terminal 200 has already reported its capability to base station 100 through a capability report or an early indication (such as a PRACH transmitted under specific conditions or Msg 3 including specific information).

Thus, it is possible to allocate an appropriate Msg3 transmission timing according to the capabilities of both eRedCap terminals and non-eRedCap terminals.

(3) In each of the above embodiments, a value smaller than a threshold may be configured (scheduled) as a value of a parameter (for example, the number of PRBs, TB size, TB scaling factor) related to the data size of RAR, and a value equal to or larger than the threshold does not have to be configured.

Thus, the data size of RAR is likely to be set to a size corresponding to the processing capability of the eRedCap terminal, and thus, the processing time for RAR can be shortened and the transmission timing of the PUSCH for Msg3 can be advanced even in the case of the eRedCap terminal.

### (Parameter Related to Data Size)

In each of the above-described embodiments, the number of PRBs, the TB size, and the TB scaling factor have been described as examples of parameters related to the data size, but the parameters related to the data size may be other parameters different from these. For example, the parameter related to the data size may be a modulation order, a code rate, the number of resource elements (REs), the number of transmission layers, or the amount of overhead of a control signal or a reference signal.

Further, in each of the above-described exemplary embodiments, an example using a PRB has been described, but the present disclosure is not limited thereto, and for example, a Virtual Resource Block (VRB), a Common Resource Block (CRB), or another type of RB may be used.

Further, in each of the above-described embodiments, the number of PRBs corresponding to the characteristics that the eRedCap terminal can support has been described as the "number of PRBs equivalent to 5 MHz," but the frequency bandwidth is not limited to 5 MHz and may be another bandwidth. Further, the maximum numbers of PRBs corresponding to the "number of PRBs equivalent to 5 MHz" have been described as 11 for an SCS of 30 kHz and 25 for an SCS of 15 kHz, respectively, but the maximum number of PRBs corresponding to the "number of PRBs equivalent to 5 MHz" for each SCS is not limited to these values and may be other values. Further, the SCS is not limited to 15 kHz and 30 kHz, and may be other values.

Further, the values of the TB size and the TB scaling factor described above are merely examples, and other values may be used.

### (PRB Mapping Method)

The mapping of PRBs in the PDSCH may be contiguous in frequency or non-contiguous in frequency.

### (Combination of Downlink Channel And Uplink Channel)

In each of the above-described embodiments, the combination of a PDSCH for RAR and a PUSCH for Msg3 has been described, but the downlink channel is not limited to the PDSCH for RAR and may be another downlink channel or signal, and the uplink channel is not limited to the PUSCH for Msg3 and may be another uplink channel or signal. Further, the combination of the downlink channel and the uplink channel may be another combination.

For example, each of the above embodiments may be applied to the following combinations of channels or signals:
- PDSCH for RAR and PRACH (for example, the PRACH may be a signal transmitted when reception of the PDSCH fails);
- PDSCH and PUCCH (for example, the PUCCH may be a channel used for transmitting ACK/NACK for the PDSCH);
- PDCCH and PUSCH (for example, the PUSCH may be a channel assigned by the PDCCH); and
- PDCCH and a Sounding Reference Signal (SRS) (for example, the SRS may be a signal allocated by the PDCCH).

For example, the minimum time interval (m') between the PDSCH and PUCCH (for example, the channel for transmitting ACK/NACK for PDSCH) in a case where the sum of the values of parameters (for example, the number of PRBs, TB size, or TB scaling factor) related to the data sizes of a plurality (for example, two) of PDSCHs (for example, a unicast PDSCH and a broadcast PDSCH, or two broadcast PDSCHs) allocated for terminal 200 to the same time (for example, symbol or slot) is larger than a threshold may be configured. In the case where the sum of the values of the parameters related to the data sizes of the two PDSCHs is larger than the threshold, the two PDSCHs and the PUCCH may be allocated such that the time interval between the two PDSCHs and the PUCCH is equal to or greater than m'.

Further, in each of the above-described embodiments, a combination of a downlink channel (for example, PDSCH) and an uplink channel (for example, PUSCH) has been described, but the present disclosure is not limited thereto, and may be, for example, a combination of an uplink channel and a downlink channel, or a combination including a sidelink channel.

### (Parameter Configuration)

The value of the parameter (for example, k, k', m, or m') used in each of the above-described embodiments may be specified in advance in a standard, or may be indicated to terminal 200 by a control signal or the like. Further, the value of the parameter (for example, k, k', m, or m') may be a value that is different depending on the processing capability (for example, 1 or 2), or may be a value that is uniquely determined regardless of the processing capability.

Further, in the above embodiments, the examples in which a resource for PDSCH or PUSCH is allocated by the PDCCH have been described, but the present disclosure is not limited thereto, and for example, a resource may be configured by a higher layer signal.

### (Type And Identification of Terminal)

The above embodiments may be applied to, for example, an "eRedCap terminal", a RedCap terminal, a non-eRedCap terminal, or another type of terminal.

Note that, in the above-described embodiment, the characteristic (attribute or capability) of an eRedCap terminal has been described as that the supported maximum frequency allocation size (e.g., frequency bandwidth or the number of PRBs) is equal to or smaller than a threshold. However, an eRedCap terminal may be a terminal having at least one of the following characteristics:
(1) A terminal that indicates (e.g., report), to base station 100, that the terminal is "a terminal targeted for coverage enhancement," "a terminal that receives a signal repeatedly transmitted," or "an eRedCap terminal." Note that, for the above-described indication (report), an uplink channel such as a PRACH or PUSCH or an uplink signal such as a Sounding Reference Signal (SRS) may be used, for example.
(2) A terminal having at least one of the following capabilities, or a terminal reporting at least one of the following capabilities to base station 100. Note that, for the above-described report, an uplink channel such as a PRACH or PUSCH or an uplink signal such as a UCI or SRS may be used, for example.
   - A terminal for which the transmittable and receivable frequency bandwidth (e.g., maximum value) is equal to or less than a threshold value (e.g., equal to or less than 5 MHz)
   - A terminal for which the number of transmittable and receivable PRBs (e.g., maximum number) is equal to or less than a threshold value (e.g., equal to or less than 25 or equal to or less than 11)
   - A terminal for which the number of implemented reception antennae is equal to or less than a threshold value (e.g., threshold = 1)
   - A terminal for which the number of supportable downlink ports (e.g., the number of reception antenna ports) is equal to or less than a threshold value (e.g., threshold value = 2)
   - A terminal for which the number of supportable transmission ranks (e.g., the number of maximum Multiple-Input Multiple-Output (MIMO) layers (or the number of ranks)) is equal to or less than a threshold value (e.g., threshold value = 2)
   - A terminal capable of transmitting and receiving a signal in a frequency band equal to or less than a threshold value (e.g., Frequency Range 1 (FR1) or a band equal to or less than 6 GHz)
   - A terminal for which the processing time is equal to or longer than a threshold value
   - A terminal for which the available transport block size (TBS) is equal to or smaller than a threshold value
   - A terminal for which the number of available transmission ranks (e.g., the number of MIMO transmission layers) is equal to or less than a threshold value.
   - A terminal for which the available modulation order is equal to or less than a threshold value
   - A terminal for which the number of available Hybrid Automatic Repeat reQuest (HARQ) processes is equal to or less than a threshold value.
   - A terminal that supports Rel-18 or a later release.
(3) A terminal to which a parameter supporting an eRedCap terminal is indicated from base station 100. Note that the parameter supporting an eRedCap terminal may include, for example, a parameter such as Subscriber Profile ID for RAT/Frequency Priority (SPID).

Note that the term "non-eRedCap terminal" may mean, for example, a terminal that supports Rel-15/16/17 (e.g., terminal that does not support Rel-18) or a terminal that supports Rel-18 but does not have the above-described characteristics.

### (Supplement)

Information indicating whether terminal 200 supports the functions, operations, or processes described in the above-described embodiments may be transmitted (or indicated) from terminal 200 to base station 100 as capability information or a capability parameter of terminal 200.

The capability information may include an information element (IE) individually indicating whether terminal 200 supports at least one of the functions, operations, or processes described in the above-described embodiments. Alternatively, the capability information may include an information element indicating whether terminal 200 supports a combination of any two or more of the functions, operations, or processes described in the above-described embodiments, modifications, and supplements.

Base station 100 may determine (or assume) the function, operation, or process supported (or not supported) by terminal 200 of the transmission source of the capability information, based on the capability information received from terminal 200, for example. Base station 100 may perform an operation, processing, or control according to a determination result based on the capability information. For example, base station 100 may control an uplink resource to be assigned to the terminal based on the capability information received from terminal 200.

Note that the fact that terminal 200 does not support some of the functions, operations, or processes described in the above-described embodiments may be read as that some of the functions, operations, or processes are limited in terminal 200. For example, information or a request on such limitation may be indicated to base station 100.

Information on the capability or limitation of terminal 200 may be defined, for example, in the standard, or may be implicitly indicated to base station 100 in association with information known to base station 100 or information transmitted to base station 100.

### (Control Signal)

In the present disclosure, the downlink control signal (or downlink control information) relating to the exemplary embodiment of the present disclosure may be a signal (or information) transmitted in a Physical Downlink Control Channel (PDCCH) in a physical layer, for example, or may be a signal (or information) transmitted in a Medium Access Control Control Element (MAC CE) or Radio Resource Control (RRC) in a higher layer. Further, the signal (or information) is not limited to that notified by the downlink control signal, but may be predefined in the specifications (or standard) or may be pre-configured for the base station and the terminal.

Furthermore, the PDCCH may be transmitted, for example, in either Common Search Space (CSS) or UE Specific Search Space (USS).

### (Base Station)

In one exemplary embodiment of the present disclosure, the base station may be a transmission reception point (TRP), a clusterhead, an access point, a remote radio head (RRH), an eNodeB (eNB), a gNodeB (gNB), a base station (BS), a base transceiver station (BTS), a base unit, or a gateway, for example. Further, in sidelink communication, a terminal may play a role of a base station. Furthermore, instead of the base station, a relay apparatus that relays communication between a higher node and a terminal may be used. Moreover, a road side device may be used.

### (Uplink/Downlink/Sidelink)

An exemplary embodiment of the present disclosure may be applied to, for example, any of an uplink, a downlink, and a sidelink. For example, an exemplary embodiment of the present disclosure may be applied to an uplink Physical Uplink Shared Channel (PUSCH), Physical Uplink Control Channel (PUCCH), or Physical Random Access Channel (PRACH), a downlink Physical Downlink Shared Channel (PDSCH), PDCCH, or Physical Broadcast Channel (PBCH), or a sidelink Physical Sidelink Shared Channel (PSSCH), Physical Sidelink Control Channel (PSCCH), or Physical Sidelink Broadcast Channel (PSBCH).

Note that the PDCCH, the PDSCH, the PUSCH, and the PUCCH are examples of a downlink control channel, a downlink data channel, an uplink data channel, and an uplink control channel, respectively. Further, the PSCCH and the PSSCH are examples of a sidelink control channel and a sidelink data channel, respectively. Further, the PBCH and PSBCH are examples of broadcast channels, and the PRACH is an example of a random access channel.

### (Data Channel/Control Channel)

An exemplary embodiment of the present disclosure may be applied to, for example, any of a data channel and a control channel. For example, a channel in an exemplary embodiment of the present disclosure may be replaced with any one of the PDSCH, the PUSCH, and the PSSCH being the data channels, or the PDCCH, the PUCCH, the PBCH, the PSCCH, and the PSBCH being the control channels.

### (Reference Signal)

In one exemplary embodiment of the present disclosure, a reference signal is a signal known to both of a base station and a terminal, and may also be referred to as a Reference Signal (RS) or a pilot signal. The reference signal may be any of a Demodulation Reference Signal (DMRS), a Channel State Information-Reference Signal (CSI-RS), a Tracking Reference Signal (TRS), a Phase Tracking Reference Signal (PTRS), a Cell-specific Reference Signal (CRS), or a Sounding Reference Signal (SRS).

### (Time Intervals)

In one exemplary embodiment of the present disclosure, a time resource unit is not limited to one or a combination of slots and symbols, and may be a time resource unit, such as a frame, superframe, subframe, slot, time slot, subslot, minislot, or a time resource unit, such as a symbol, orthogonal frequency division multiplexing (OFDM) symbol, single carrier-frequency division multiplexing access (SC-FDMA) symbol, or another time resource unit. The number of symbols included in one slot is not limited to the number of symbols exemplified in the above-described embodiments, and may be another number of symbols.

### (Frequency Band)

An exemplary embodiment of the present disclosure may be applied to any of a licensed band or an unlicensed band (unlicensed spectrum, shared spectrum). In a case of an unlicensed band, a channel access procedure (Listen Before Talk (LBT), carrier sense, and/or Channel Clear Assessment (CCA)) may be performed prior to transmission of each signal.

### (Communication)

An exemplary embodiment of the present disclosure may be applied to any of communication between a base station and a terminal (Uu link communication), communication between a terminal and a terminal (Sidelink communication), and communication of a Vehicle to Everything (V2X). For example, the PDCCH in one exemplary embodiment of the present disclosure may be replaced with PSCCH, the PUSCH/PDSCH may be replaced with PSSCH, the PUCCH may be replaced with Physical Sidelink Feedback Channel (PSFCH), and the PBCH may be replaced with PSBCH.

Further, one exemplary embodiment of the present disclosure may be applied to any of a terrestrial network or a network (Non-Terrestrial Network (NTN)) other than a terrestrial network using a satellite or a High Altitude Pseudo Satellite (HAPS). Further, an exemplary embodiment of the present disclosure may be applied to a network having a large cell size, and a terrestrial network with a large delay compared with a symbol length or a slot length, such as an ultra-wideband transmission network.

### (Antenna Port)

In an exemplary embodiment of the present disclosure, an antenna port refers to a logical antenna (antenna group) formed of one or more physical antenna(s). For example, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### <5G NR System Architecture and Protocol Stacks>

The 3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of terminals (e.g., smartphones).

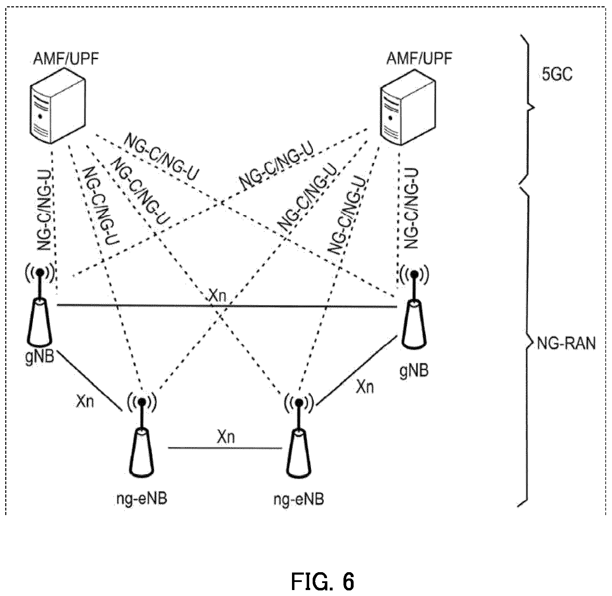

For example, the overall system architecture assumes an NG-RAN (Next Generation-Radio Access Network) that includes gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 6 (see e.g., 3GPP TS 38.300 v15.6.0, section 4).

The user plane protocol stack for NR (see, e.g., 3GPP TS 38.300, section 4.4.1) includes the Packet Data Convergence Protocol (PDCP, see clause 6.4 of TS 38.300) Radio Link Control (RLC, see clause 6.3 of TS 38.300) and Medium Access Control (MAC, see clause 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., clause 6.5 of 3GPP TS 38.300). A control plane protocol stack is also defined for NR (see for instance TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For instance, the Medium Access Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For example, the physical channels include a Physical Random Access Channel (PRACH), Physical Uplink Shared Channel (PUSCH), and Physical Uplink Control Channel (PUCCH) as uplink physical channels, and a Physical Downlink Shared Channel (PDSCH), Physical Downlink Control Channel (PDCCH), and Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates on the order of three times what is offered by IMT-Advanced. On the other hand, in case of URLLC, the tighter requirements are put on ultra-low latency (0.5 ms for UL and DL each for user plane latency) and high reliability (1-10-5 within 1 ms). Finally, the mMTC may preferably require high connection density (1,000,000 devices/km² in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacings of 15 kHz, 30 kHz, and 60 kHz, ... are being considered at the moment. The symbol duration Tu and the subcarrier spacing Δf are directly related through the formula Δf = 1/Tu. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0).

### <Functional Split between NG-RAN and 5GC in 5G NR>

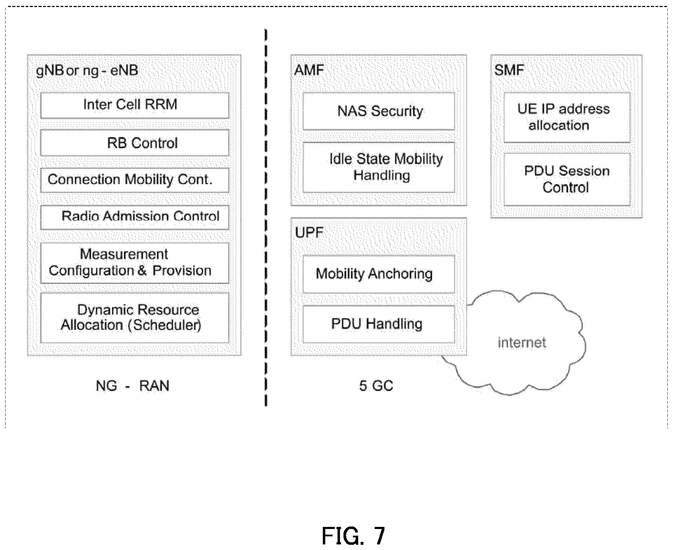

FIG. 7 illustrates functional split between NG-RAN and 5GC. A logical node of the NG-RAN is gNB or ng-eNB. The 5GC includes logical nodes AMF, UPF, and SMF.

For example, gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of user plane data towards UPF(s);
- Routing of control plane information towards AMF;
- Connection setup and release;
- Scheduling and transmission of paging messages;
- Scheduling and transmission of system broadcast information (originated from the AMF or Operation, Admission, Maintenance (OAM));
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Function of Non-Access Stratum (NAS) signaling termination;
- NAS signaling security;
- Access Stratum, AS, Security control;
- Inter-Core Network (CN) node signaling for mobility between 3GPP access networks;
- Idle mode UE Reachability (including control and execution of paging retransmission);
- Registration area management;
- Support of intra-system and inter-system mobility;
- Access Authentication;
- Access Authorization including check of roaming rights;
- Mobility management control (subscription and policies);
- Support of Network Slicing;
- Session Management Function (SMF) selection

In addition, the User Plane Function (UPF) hosts the following main functions:
- Anchor point for Intra-/Inter-RAT mobility (when applicable);
- External Protocol Data Unit (PDU) session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g., packet filtering, gating, UL/DL rate enforcement;
- Uplink Traffic verification (SDF to QoS flow mapping);
- Downlink packet buffering and downlink data notification triggering.

Finally, the Session Management Function (SMF) hosts the following main functions:
- Session Management;
- UE IP address allocation and management;
- Selection and control of UP function;
- Configuration function for traffic steering at the User Plane Function (UPF) to route traffic to a proper destination;
- Control part of policy enforcement and QoS; and
- Downlink data indication.

### <RRC Connection Setup and Reconfiguration Procedure>

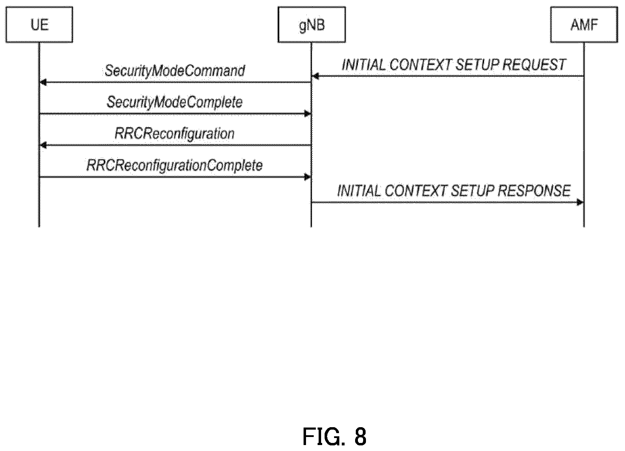

FIG. 8 illustrates some interactions between a UE, gNB, and AMF (a 5GC entity) in the context of a transition of the UE from RRC_IDLE to RRC_CONNECTED for the NAS part (see TS 38.300 v15.6.0).

RRC is higher layer signaling (protocol) used for UE and gNB configuration. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a SecurityModeCommand message and by the UE responding to the gNB using the SecurityModeComplete message. Afterwards, the gNB performs the reconfiguration to setup the Signaling Radio Bearer 2 (SRB2) and Data Radio Bearer(s) (DRB(s)) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB indicates the AMF that the setup procedure is completed with INITIAL

### CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which in operation, transmits an initial context setup message to the gNodeB via the NG connection such that a signaling radio bearer between the gNodeB and a User Equipment (UE) is set up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

### <Usage Scenarios of IMT for 2020 and beyond>

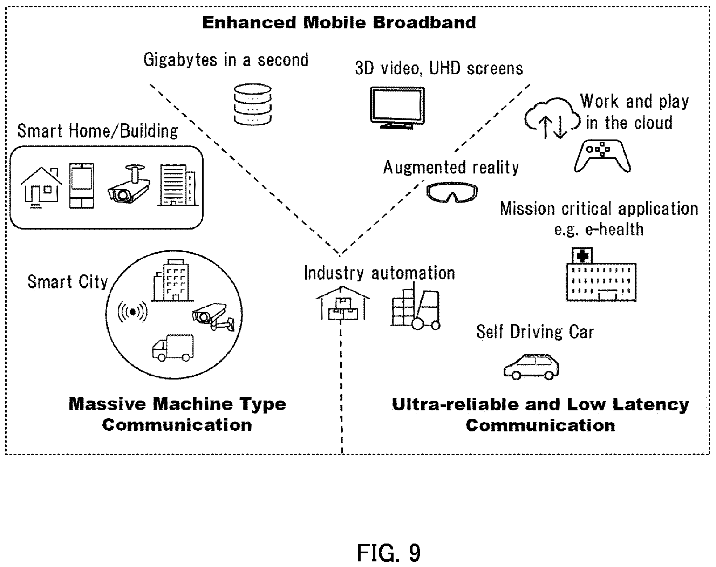

FIG. 9 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 9 illustrates some examples of envisioned usage scenarios for IMT for 2020 and beyond (see, e.g., ITU-R M. 2083 FIG. 2).

The URLLC use case has stringent requirements for capabilities such as throughput, latency and availability. The URLLC use case has been envisioned as one of element techniques to enable future vertical applications such as wireless control of industrial manufacturing or production processes, remote medical surgery, distribution automation in a smart grid, transportation safety, etc. Ultra-reliability for the URLLC is to be supported by identifying the techniques to meet the requirements set by TR 38.913. For NR URLLC in Release 15, key requirements include a target user plane latency of 0.5 ms for uplink (UL) and 0.5 ms for downlink (DL). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for the URLLC, more compact DCI formats, repetition of PDCCH, etc. However, the scope may widen for achieving ultra-reliability as the NR becomes more stable and developed (for NR URLLC key requirements). Particular use cases of NR URLLC in Release 15 include augmented reality/virtual reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. The pre-emption means that a transmission for which resources have already been allocated is stopped, and the already allocated resources are used for another transmission that has been requested later but has lower latency/higher priority requirements. Accordingly, the already granted transmission is replaced with a later transmission. The pre-emption is applicable independent of the particular service type. For example, a transmission for a service-type A (URLLC) may be replaced with a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability improvement in NR becomes wider. One key requirement to all the cases, and especially necessary for the URLLC and mMTC for example, is high reliability or ultra-reliability. Several mechanisms can be considered to improve the reliability from the radio perspective and network perspective. In general, there are a few key important areas that can help improve the reliability. These areas include compact control channel information, data/control channel repetition, and diversity with respect to the frequency, time, and/or spatial domain. These areas are applicable to reliability improvement in general, regardless of particular communication scenarios.

For NR URLLC, further use cases with tighter requirements have been considered such as factory automation, transport industry, and electrical power distribution. The tighter requirements are higher reliability (up to 10-6 level), higher availability, packet size of up to 256 bytes, time synchronization down to the order of a few µs where the value can be one or a few µs depending on frequency range and short latency in the order of 0.5 to 1 ms (e.g., target user plane latency of 0.5 ms) depending on the use cases.

Moreover, for NR URLLC, several technology enhancements from the physical layer perspective have been identified. These technology enhancements include Physical Downlink Control Channel (PDCCH) enhancements related to compact DCI, PDCCH repetition, and increased PDCCH monitoring. In addition, Uplink Control Information (UCI) enhancements are related to enhanced Hybrid Automatic Repeat Request (HARQ) and CSI feedback enhancements. Also, PUSCH enhancements related to mini-slot level hopping and retransmission/repetition enhancements have been identified. The term "mini-slot" refers to a transmission time interval (TTI) including a smaller number of symbols than a slot (a slot includes fourteen symbols).

### <QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearer (DRB) together with the PDU session, e.g., as illustrated above with reference to FIG. 8. Further, additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

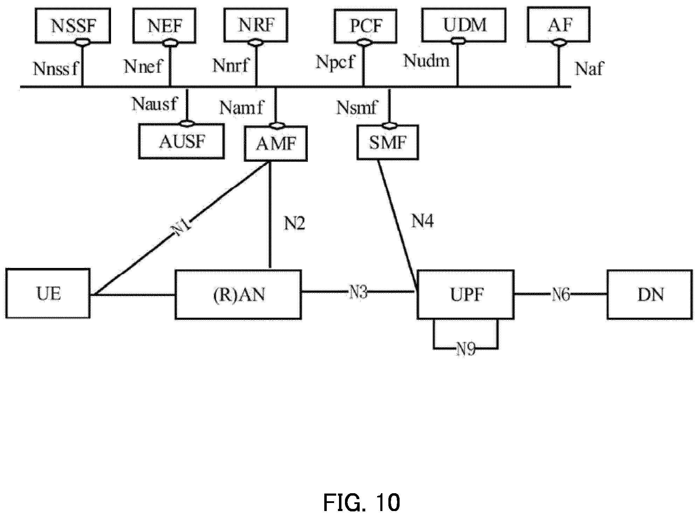

FIG. 10 illustrates a 5G NR non-roaming reference architecture (see TS 23.501 v16.1.0, section 4.23). An Application Function (AF) (e.g., an external application server hosting 5G services, exemplarily described in FIG. 9) interacts with the 3GPP Core Network in order to provide services, for example to support application influencing on traffic routing, accessing Network Exposure Function (NEF) or interacting with the policy framework for policy control (e.g., QoS control) (see Policy Control Function, PCF). Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 10 illustrates further functional units of the 5G architecture, namely a Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or 3rd party services). All of or a part of the core network functions and the application services may be deployed and running on cloud computing environments.

In the present disclosure, thus, an application server (e.g., AF of the 5G architecture), is provided that includes a transmitter, which in operation, transmits a request containing a QoS requirement for at least one of the URLLC, eMMB, and mMTC services to at least one of functions (for example NEF, AMF, SMF, PCF, UPF, etc) of the 5GC to establish a PDU session including a radio bearer between a gNodeB and a UE in accordance with the QoS requirement, and control circuitry, which, in operation, performs the services using the established PDU session.

Any component termed with a suffix, such as "-er," "-or," or "-ar" in the above-described embodiments may be replaced with other terms such as "circuit (circuitry)," "device," "unit," or "module."

Further, in the above-described embodiment, the values of parameters such as the number of RBs, a frequency bandwidth, and SCS are exemplary and may be other values.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas. Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A terminal according to a non-limiting and exemplary embodiment of the present disclosure, includes: reception circuitry, which, in operation, receives a first signal; and transmission circuitry, which, in operation, transmits a second signal after the first signal is received, in which a transmission timing of the second signal is different depending on a parameter related to a resource size of the first signal.

In a non-limiting and exemplary embodiment of the present disclosure, a minimum time interval between the first signal and the second signal in a case where a value of the parameter is larger than a threshold is configured.

In a non-limiting and exemplary embodiment of the present disclosure, a time resource interval between the first signal and the second signal in the case where the value of the parameter is larger than the threshold is configured to be equal to or larger than the minimum time interval.

In a non-limiting and exemplary embodiment of the present disclosure, in a case where the value of the parameter is equal to or less than the threshold, a time resource interval between the first signal and the second signal is configured to be shorter than the minimum time interval.

In a non-limiting and exemplary embodiment of the present disclosure, a time resource interval between the first signal and the second signal is different depending on the value of the parameter.

In a non-limiting and exemplary embodiment of the present disclosure, the parameter is at least one of a number of physical resource blocks (PRBs) allocated to the first signal, a transport block size (TB size) allocated to the first signal, and a TB scaling factor used for calculating the TB size allocated to the first signal.

In a non-limiting and exemplary embodiment of the present disclosure, a configuration of the transmission timing depending on the parameter is applied in a case where a cell permits access of a terminal with a restricted capability.

In a non-limiting and exemplary embodiment of the present disclosure, a configuration of the transmission timing depending on the parameter is applied to the first signal and the second signal allocated to a terminal that a base station considers to be a terminal with a restricted capability.

In a non-limiting and exemplary embodiment of the present disclosure, the first signal is a signal of a downlink channel for transmitting a random access response in a random access procedure, and the second signal is a signal of an uplink channel for transmitting Message 3 in the random access procedure.

A base station according to a non-limiting and exemplary embodiment of the present disclosure includes: transmission circuitry, which, in operation, transmits a first signal; and reception circuitry, which, in operation, receives a second signal after the first signal is transmitted, in which a reception timing of the second signal is different depending on a parameter related to a resource size of the first signal.

In a communication method according to a non-limiting and exemplary embodiment of the present disclosure, a terminal receives a first signal, and transmits a second signal after the first signal is received, and a transmission timing of the second signal is different depending on a parameter related to a resource size of the first signal.

In a communication method according to a non-limiting and exemplary embodiment of the present disclosure, a base station transmits a first signal, and receives a second signal after the first signal is transmitted; and a reception timing of the second signal is different depending on a parameter related to a resource size of the first signal.

The disclosure of Japanese Patent Application No. 2022-178216, filed on November 7, 2022, including the specification, drawings and abstract, is incorporated herein by reference in its entirety.

### Industrial Applicability

An exemplary embodiment of the present disclosure is useful for radio communication systems.

### Reference Signs List

100 Base station
101, 206 Controller
102 DCI generator
103 RAR generator
104 Higher-layer signal generator
105, 207 Encoder/modulator
106, 208 Signal mapper
107, 209 Transmitter
108, 201 Antenna
109, 202 Receiver
110 Signal separator
111, 205 Demodulator/decoder
200 Terminal
203 Signal separator
204 DCI detector

## Claims

1. A terminal, comprising:
reception circuitry, which, in operation, receives a first signal; and
transmission circuitry, which, in operation, transmits a second signal after the first signal is received, wherein
a transmission timing of the second signal is different depending on a parameter related to a resource size of the first signal.

2. The terminal according to claim 1, wherein
a minimum time interval between the first signal and the second signal in a case where a value of the parameter is larger than a threshold is configured.

3. The terminal according to claim 2, wherein
a time resource interval between the first signal and the second signal in the case where the value of the parameter is larger than the threshold is configured to be equal to or larger than the minimum time interval.

4. The terminal according to claim 2, wherein
in a case where the value of the parameter is equal to or less than the threshold, a time resource interval between the first signal and the second signal is configured to be shorter than the minimum time interval.

5. The terminal according to claim 2, wherein
a time resource interval between the first signal and the second signal is different depending on the value of the parameter.

6. The terminal according to claim 1, wherein
the parameter is at least one of a number of physical resource blocks (PRBs) allocated to the first signal, a transport block size (TB size) allocated to the first signal, and a TB scaling factor used for calculating the TB size allocated to the first signal.

7. The terminal according to claim 1, wherein
a configuration of the transmission timing depending on the parameter is applied in a case where a cell permits access of a terminal with a restricted capability.

8. The terminal according to claim 1, wherein
a configuration of the transmission timing depending on the parameter is applied to the first signal and the second signal allocated to a terminal that a base station considers to be a terminal with a restricted capability.

9. The terminal according to claim 1, wherein:
the first signal is a signal of a downlink channel for transmitting a random access response in a random access procedure, and
the second signal is a signal of an uplink channel for transmitting Message 3 in the random access procedure.

10. A base station, comprising:
transmission circuitry, which, in operation, transmits a first signal; and
reception circuitry, which, in operation, receives a second signal after the first signal is transmitted, wherein
a reception timing of the second signal is different depending on a parameter related to a resource size of the first signal.

11. A communication method performed by a terminal, comprising:
receiving a first signal; and
transmitting a second signal after the first signal is received, wherein
a transmission timing of the second signal is different depending on a parameter related to a resource size of the first signal.

12. A communication method performed by a base station, comprising:
transmitting a first signal; and
receiving a second signal after the first signal is transmitted, wherein
a reception timing of the second signal is different depending on a parameter related to a resource size of the first signal.
